# EUROPEAN PATENT APPLICATION

(11) **EP 4 275 496 A1**
(43) Date of publication of application: **15.11.2023**
(21) Application number: 22736761.2
(22) Date of filing: 06.01.2022
(51) Int. Cl.: A01N 63/32, A01G 7/06, A01N 43/50, A01N 63/30, A01P 21/00

(54) **PLANT GROWTH REGULATOR AND METHOD FOR PROMOTING PLANT GROWTH**

(30) Priority: 08.01.2021 JP 2021002440
(71) Applicant: Kureha Corporation, Chuo-ku Tokyo 103-8552 (JP)
(72) Inventor: KOSHIYAMA, Tatsuyuki, Tokyo 103-8552 (JP); KANEKO, Mutsumi, Tokyo 103-8552 (JP); HIGASHIYAMA, Yukihiro, Tokyo 103-8552 (JP)
(74) Representative: Hoefer & Partner Patentanwälte mbB
(86) International application number: PCT/JP2022/000190
(87) International publication number: WO 2022/149593

(57) **Abstract**

The plant growth regulator according to an embodiment of the present invention contains an extract of an ergothioneine-producing microorganism as an active ingredient. The extract contains ergothioneine.

## Description

### TECHNICAL FIELD

The present invention relates to a plant growth regulator and use thereof.

### BACKGROUND ART

There has been a demand for an agent having a high plant growth promoting effect on a wide range of plants. As such an agent, for example, ergothioneine which is one of sulfur-containing amino acids has been known.

Patent Document 1 describes a fertilizer containing ergothioneine or a culture product of microorganisms that can biosynthesize ergothioneine.

Patent Documents 2 and 3 describe application of 2-mercaptohistidine betaine, which is ergothioneine, to a plant. It is described that, by such application, stress of a plant and conditions related to the stress can be controlled, and growth of the plant can be promoted.

Patent Document 4 describes application of a microorganism extract containing ergothioneine as a fertilizer. It is described that, by such application, nitrogenase activity is enhanced.

### CITATION LIST

### Patent Document

Patent Document 1: JP 2018-130091 A
Patent Document 2: WO 96/14749
Patent Document 3: WO 96/23413
Patent Document 4: EP 3696154 A

### SUMMARY OF INVENTION

### Technical Problem

However, the existing agents do not have sufficient growth promoting effect, and there is a demand for development of a plant growth regulator exhibiting an excellent growth promoting effect.

The present invention has been made in view of the above objective, and an object of the present invention is to provide a plant growth regulator excellent in the plant growth promoting effect.

### SOLUTION TO PROBLEM

As a result of diligent research of the present inventors, unexpectedly, it was found that an extract of ergothioneine-producing fungi exhibits superior plant growth promoting action to that of ergothioneine alone, and thus the present invention has been completed.

The plant growth regulator according to an embodiment of the present invention is a plant growth regulator containing an extract of an ergothioneine-producing microorganism as an active ingredient, the extract containing ergothioneine.

### ADVANTAGEOUS EFFECTS OF INVENTION

According to an embodiment of the present invention, a plant growth regulator having an excellent plant growth promoting effect can be provided.

### DESCRIPTION OF EMBODIMENTS

### [Plant growth regulator]

The plant growth regulator of the present embodiment contains an extract of ergothioneine-producing microorganisms as an active ingredient.

### Ergothioneine-producing microorganisms

As the ergothioneine-producing microorganisms, for example, microorganisms including but not limited to ones known as ergothioneine-producing microorganisms can be used. The microorganisms may be isolated from the natural environment. The microorganisms may have been mutated or undergone a treatment, such as genetic recombination, as long as the microorganisms have capability of producing ergothioneine.

Examples of the ergothioneine-producing microorganisms include microorganisms belonging to the genus Apiotrichum such as Apiotrichum porosum; microorganisms belonging to the genus Dirkmeia such as Dirkmeia churashimaensis; microorganisms belonging to the genus Papiliotrema such as Papiliotrema flavescens; microorganisms belonging to the genus Pseudozyma such as Pseudozyma siamensis, Pseudozyma antarctica, Pseudozyma tsukubaensis, Pseudozyma hubeiensis, Pseudozyma shanxiensis, Pseudozyma rugulosa, Pseudozyma crassa, Pseudozyma alboarmeniaca, Pseudozyma graminicola, Pseudozyma fusiformata, Pseudozyma parantarctica, Pseudozyma flocculosa, and Pseudozyma churashimaensis; microorganisms belonging to the genus Ustilago such as Ustilago maydis; microorganisms belonging to the genus Methylobacterium such as Methylobacterium aquaticum; microorganisms belonging to the genus Aureobasidium such as Aureobasidium pullulans, Aureobasidium melanogenum (Acetobacter melanogenum), Aureobasidium namibiae, and Aureobasidium subglaciale; microorganisms belonging to the genus Rhodotorula such as Rhodotorula mucilaginosa, Rhodotorula glutinis, and Rhodotorula paludigena; microorganisms belonging to the genus Rhodosporidiobolus such as Rhodosporidiobolus azoricus; microorganisms belonging to the genus Vanrija; microorganisms belonging to the genus Pleurotus such as Pleurotus citrinopileatus; microorganisms belonging to the genus Aspergillus such as Aspergillus sojae, Aspergillus niger, and Aspergillus oryzae; microorganisms belonging to the genus Streptomyces such as Streptomyces lividans, Streptomyces coelicolor, Streptomyces avermitilis, Streptomyces griseus, Streptomyces albus, and Streptomyces albulus; microorganisms belonging to the genus Actinomyces such as Actinomyces naeslundii, Actinomyces odontolyticus, and Actinomyces oris; microorganisms belonging to the genus Mycobacterium such as Mycobacterium tuberculosis, Mycobacterium smegmatis, and Mycobacterium avium; microorganisms belonging to the genus Corynebacterium such as Corynebacterium glutamicum, Corynebacterium acetoacidophilum, Corynebacterium acetoglutamicum, Corynebacterium alkanolyticum, Corynebacterium thermoaminogenes, and Corynebacterium efficiens; microorganisms belonging to the genus Escherichia such as Escherichia coli; microorganisms belonging to the genus Enterobacter such as Enterobacter agglomerans, Enterobacter aerogenes, and Enterobacter cloacae; microorganisms belonging to the genus Pantoea such as Pantoea ananatis, Pantoea stewartii, Pantoea agglomerans, and Pantoea citrea; microorganisms belonging to the genus Klebsiella such as Klebsiella planticola; microorganisms belonging to the genus Salmonella such as Salmonella enterica; microorganisms belonging to the genus Schizosaccharomyces such as Schizosaccharomyces pombe; microorganisms belonging to the genus Saccharomyces such as Saccharomyces cerevisiae; microorganisms belonging to the genus Chlorobium such as Chlorobium limicola; microorganisms belonging to the genus Candida such as Candida utilis; microorganisms belonging to the genus Penicillium such as Penicillium expansum; microorganisms belonging to the genus Neurospora such as Neurospora crassa; microorganisms belonging to the genus Claviceps such as Claviceps purpurea; microorganisms belonging to the genus Moniliella such as Moniliella pollinis and Moniliella megachiliensis; microorganisms belonging to the genus Cryptococcus such as Cryptococcus flavescens, Cryptococcus phenolicus, and Cryptococcus terreus; microorganisms belonging to the genus Pycnoporus such as Pycnoporus coccineus and Pycnoporus cinnabarinus; microorganisms belonging to the genus Pleurotus such as Pleurotus ostreatus, Pleurotus cornucopiae var.citrinopileatus, Pleurotus pulmonarius, and Pleurotus eryngii; microorganisms belonging to the genus Flammulina such as Flammulina velutipes; microorganisms belonging to the genus Leucopaxillus such as Leucopaxillus giganteus; microorganisms belonging to the genus Phellinus such as Phellinus linteus; microorganisms belonging to the genus Tricholoma such as Tricholoma equestre and Tricholoma matsutake; microorganisms belonging to the genus Coprinus such as Coprinus comatus; microorganisms belonging to the genus Hericium such as Hericium erinaceus; microorganisms belonging to the genus Lyophyllum such as Lyophyllum shimeji and Lyophyllum decastes; microorganisms belonging to the genus Rozites such as Rozites caperata; microorganisms belonging to the genus Pholiota such as Pholiota nameko; microorganisms belonging to the genus Mycoleptodonoides such as Mycoleptodonoides aitchisonii; microorganisms belonging to the genus Agrocybe such as Agrocybe cylindracea; microorganisms belonging to the genus Grifola such as Grifola frondosa and Grifola gargal; and microorganisms belonging to the genus Agaricus such as Agaricus bisporus and Agaricus campestris.

### Extract of ergothioneine-producing microorganism

The extract of the ergothioneine-producing microorganisms can be obtained by subjecting ergothioneine-producing microorganisms or a culture product of the microorganisms to extraction treatment. The culture product includes, for example, culture supernatants, culture precipitates, culture medium, cultured microbial cells, and treated products of cultured microbial cells, such as crushed products of cultured microbial cells and lyophilized products of cultured microbial cells.

The method of culturing the ergothioneine-producing microorganisms may be performed in accordance with a typical culturing method that is employed for microorganisms. The form of culture may be culture using a solid culture medium, or batch culture, fed-batch culture, or continuous culture using a liquid culture medium, and ventilation stirring may be performed. As the culture medium, a culture medium containing carbon and nitrogen sources that are assimilable by microorganisms or a required nutrient source such as an inorganic salt may be used. The culture conditions, such as culture pH, culture temperature, and culture duration, can be appropriately selected based on the type and culture scale of the microorganisms to be cultured.

Examples of the extraction treatment include hot water extraction; solvent extraction by an organic solvent (e.g., methanol, ethanol, propanol, diethyl ether, tetrahydrofuran, acetone, methyl ethyl ketone, ethyl acetate, acetonitrile, chloroform, dichloromethane, pentane, hexane, and toluene) or the like; pressurized extraction by an autoclave or the like; chemical extraction by an enzyme, a surfactant, or the like; ultrasonic extraction; alkali extraction (e.g., sodium hydroxide, potassium hydroxide, calcium hydroxide, and potassium carbonate); acid extraction (e.g., hydrochloric acid, sulfuric acid, acetic acid, and phosphoric acid); extraction by osmotic pressure (e.g., sodium chloride and sucrose); extraction by pulverization; extraction by grinding (mashing); extraction by freeze-thawing; extraction by liquid nitrogen; and extraction by high-speed agitation. From the perspective of exhibiting excellent plant growtheffect, the extraction treatment is preferably hot water extraction. One type of extraction treatment may be performed, or two or more types of extraction treatments may be performed.

The hot water extraction is an extraction process in which an extraction target is brought into contact with or soaked in hot water for a certain time period. The temperature of water used in the hot water extraction is preferably 40°C or higher and more preferably 60°C or higher.

The extract of ergothioneine-producing microorganisms contains ergothioneine. The lower limit of the concentration of ergothioneine contained in the extract may be 0.1 ppm or greater, and 1 ppm or greater. Furthermore, the upper limit of the concentration of the ergothioneine contained in the extract may be 10 mass% or less, and 1 mass% or less.

Since the plant growth regulator of the present embodiment contains an extract of ergothioneine-producing microorganisms as an active ingredient, a plant treated with the plant growth regulator exhibits excellent growth promoting effect. In the present specification, "excellent in growth promoting effect" means that at least one of the plant growth indices is superior to known plant growth regulators. Examples of the "plant growth index" include plant height, aboveground part weight, underground part weight, number of tillers, root yield, stem yield, number of leaves, leaf yield, number of flowers, number of fruits, fruit yield, number of seeds, and seed yield of a plant. Note that "aboveground part" indicates a part that is above the ground or water surface, and "underground part" indicates a part that is under the ground or water surface.

The plant growth regulator according to the present embodiment functions as an agent for increasing seed yield, an agent for increasing (elongating) plant height, an agent for increasing flower number, an agent for increasing aboveground part weight, or an agent for increasing underground part weight.

### (Applicable plant)

The plant growth regulator according to the present embodiment generally exhibits a growth promoting effect on all plants, and examples of applicable plants include the following: Poaceae such as rice, wheat, barley, rye (triticale), oats, triticale, corn, sorghum, sugar cane, turf, bentgrass, bermudagrass, fescue, and ryegrass; Legumes such as soybean, peanut, kidney bean, pea, adzuki bean, and alfalfa; Convolvulaceae such as sweet potato; Solanaceae such as capsicum, pepper, tomato, eggplant, potato, and tobacco; Polygonaceae such as buckwheat; Asteraceae such as sunflower; Araliaceae such as ginseng; Brassicaceae such as Arabidopsis thaliana, rapeseed, Chinese cabbage, turnip, cabbage, Japanese radish, and radish; Chenopodiaceae such as sugar beet; Malvaceae such as cotton; Rubiaceae such as coffee tree; Sterculiaceae such as cacao; Theaceae such as tea; Cucurbitaceae such as watermelon, melon, cucumber, and pumpkin; Liliaceae such as onion, leek, and garlic; Rosaceae such as strawberry, apple, almond, apricot, plum, yellow peach, Japanese plum, peach, and pear; Apiaceae such as carrot; Araceae such as taro; Anacardiaceae such as mango; Bromeliaceae such as pineapple; Caricaceae such as papaya; Ebenaceae such as persimmon; Ericaceae such as blueberry, Juglandaceae such as pecan; Musaceae such as banana; Oleaceae such as olive; Palmae such as coconut and date; Rutaceae such as mandarin orange, orange, grapefruit, and lemon; Vitaceae such as grape; flowers and ornamental plants; trees other than fruit trees; and other ornamental plants.

Other examples of the applicable plant include wild plants, cultivars, plants and cultivars bred by known hybridizing or plasmogamy, and genetically recombinant plants and cultivars obtained by gene manipulation. Examples of genetically recombined plants and cultivars include herbicide-tolerant crops, pest-resistant crops in which an insecticidal protein-producing gene has been recombined, pathogen-resistant crops in which a pathogen resistance derivative-producing gene has been recombined, taste-improved crops, yield-improved crops, preservation-improved crops, and yield-improved crops. Examples of genetically recombined cultivar that has been approved in each country include those stored in the database of the International Service for the Acquisition of Agri-biotech Applications (ISAAA). Specific examples thereof include those with trade names such as AgriSure, AgriSure 3000GT, AgriSure 3122 E-Z Refuge, AgriSure 3122 Refuge Renew, AgriSure Artesian 3030A, AgriSure Artesian 3011A, AgriSure Duracade, AgriSure Duracade 5222 E-Z Refuge, AgriSure GT, AgriSure GT/CB/LL, AgriSure RW, AgriSure Viptera 3110, AgriSure Viptera 3111, AgriSure Viptera 3220 E-Z Refuge, AgriSure Viptera 3220 Refuge Renew, BiteGard, Bollgard, Bollgard II, Bollgard II/Roundup Ready, Bollgard 3 XtendFlex Cotton, Bollgard Cotton, Bollgard/Roundup Ready Cotton, B. t., B. t/BXN Cotton, B. t. Maize, BtXtra, BXN, BXN Canola, BXN Cotton, Clearfield, DroughtGard, Enlist, Enlist Cotton, Enlist WideStrike 3 Cotton, Genuity, Genuity Bollgard II XtendFlex, Genuity Intacta RR2 Pro, Genuity SmartStax, Genuity SmartStax RIB Complete, Genuity VT Double Pro, Genuity VT Double Pro RIB Complete, Genuity VT Triple Pro, Genuity VT Triple Pro RIB Complete, GlyTol, GlyTol Cotton, Herculex, Herculex 1, Herculex RW, Herculex XTRA, IMI, IMI Canola, InVigor, KnockOut, Liberty Link, Liberty Link Conola, Liberty Link cotton, NatureGard, Newleaf, Nucotn, Optimum, Optimum AcreMax, Optimum AcreMax I, Optimum AcreMax-R, Optimum AcreMax RW, Optimum AcreMax RW-R, Optimum AcreMax Xtra-R, Optimum AcreMax Xtreme-R, Optimum AcreMax Xtreme, Optimum Intrasect, Optimum Intrasect Xtra, Optimum Intrasect Xtreme, Optimum Leptra, Optimum TRIsect, Poast Compatible, Powercore, Powercore Corn, Powercore Corn Refuge Advanced, Protecta, Roundup Ready, Roundup Ready 2, Roundup Ready Conola, Roundup Ready Cotton, Roundup Ready Xtend, Roundup Ready/YieldGard, RR Flex/Bollgard II, SCS, SmartStax, SmartStax Refuge Advanced, StarLink, Twinlink, VipCot, VipCot Cotton, WideStrike, WideStrike 3, YieldGard, YieldGard Corn Borner, YieldGard Rootworm, YieldGard Plus, and YieldGard VT Triple.

### Other component and formulation of plant growth regulator

In the plant growth regulator of the present embodiment, the extract of ergothioneine-producing microorganisms as is may be used as a plant growth regulator. Furthermore, the extract may be concentrated or purified and used as a plant growth regulator. Furthermore, the plant growth regulator of the present embodiment may further contain another component besides the extract of ergothioneine-producing microorganisms. For example, the extract of the ergothioneine-producing microorganisms may be used by mixing with a carrier (diluent), a surfactant, and other formulation aids to be used in various forms such as dustable powders, granules, micro/macro granules, wettable powders, water soluble powders/granules, emulsifiable concentrates, soluble concentrates, oil miscible liquids/powders, aerosol dispensers, microcapsule suspensions, pastes, liniments, smoke generators, gas generators, and ultra-low volume formulations.

Examples of the carrier to be used as a formulation aid include solid carriers and liquid carriers. Examples of the solid carrier include those used as powder carriers and granular carriers, such as minerals such as clay, talc, diatomaceous earth, zeolite, montmorillonite, bentonite, kaolinite, kaolin, pyrophyllite, agalmatolite, acid clay, activated clay, attapulgite, attapulgite clay, limestone, calcite, marble, vermiculite, perlite, pumice, silica stone, silica sand, sericite and porcelain stone; synthetic organic substances such as urea; salts such as calcium carbonate, sodium carbonate, magnesium carbonate, sodium sulfate, ammonium sulfate, potassium chloride, slaked lime, and baking soda; synthetic inorganic substances such as amorphous silica (e.g., white carbon and fumed silica) and titanium dioxide; plant carriers such as wood flour, corn stalk (cob), walnut shell (nut shell), fruit core, rice hull, coconut shell, sawdust, bran, soy flour, powdered cellulose, starch, dextrin, and sugars (e.g., lactose and sucrose); and various polymeric carriers such as crosslinked lignin, cation gel, gelatin gelated by heat or a polyvalent metal salt, water-soluble polymer gel (e.g., agar), chlorinated polyethylene, chlorinated polypropylene, polyvinyl acetate, polyvinyl chloride, ethylene-vinyl acetate copolymers, and urea-aldehyde resins.

Examples of the liquid carrier include aliphatic solvents such as paraffins (normal paraffin, iso-paraffin, naphthene); aromatic solvents such as xylene, alkylbenzene, alkylnaphthalene, and solvent naphtha; mixed solvents such as kerosene; machine oils such as refined high-boiling point aliphatic hydrocarbons; alcohols such as methanol, ethanol, isopropanol, butanol, and cyclohexanol; polyhydric alcohols such as ethylene glycol, diethylene glycol, propylene glycol, dipropylene glycol, hexylene glycol, polyethylene glycol, and polypropylene glycol; polyhydric alcohol derivatives such as propylene glycol ether; ketones such as acetone, acetophenone, cyclohexanone, methylcyclohexanone, and γ-butyrolactone; esters such as fatty acid methyl ester (coconut oil fatty acid methyl ester), ethylhexyl lactate, propylene carbonate, dibasic acid methyl ester (succinic acid dimethyl ester, glutamic acid dimethyl ester, and adipic acid dimethyl ester); nitrogen-containing solvents such as N-alkylpyrrolidones and acetonitrile; sulfur-containing solvents such as dimethyl sulfoxide; oils and fats such as coconut oil, soybean oil, and rapeseed oil; amide solvents such as dimethylformamide, N,N-dimethyloctaneamide, N,N-dimethyldecaneamide, 5-(dimethylamino)-2-methyl-5-oxo-pentanoic acid methyl ester, and N-acylmorpholine-based solvents (e.g., CAS No. 887947-29-7); and water.

Examples of the surfactant used as the formulation aid include nonionic surfactants, anionic surfactants, cationic surfactants, amphoteric surfactants, silicone surfactants, fluorosurfactants, and biosurfactants. Examples of the nonionic surfactants include sorbitan fatty acid ester, polyoxyethylene sorbitan fatty acid ester, sucrose fatty acid ester, polyoxyethylene fatty acid ester, polyoxyethylene resin acid ester, polyoxyethylene fatty acid diester, polyoxyethylene alkyl ether, polyoxyethylene alkylphenyl ether, polyoxyethylene dialkyl phenyl ether, polyoxyethylene alkyl phenyl ether formalin condensate, polyoxyethylene/polyoxypropylene block polymer, alkyl polyoxyethylene/polyoxypropylene block polymer ether, alkyl phenyl polyoxyethylene/polyoxypropylene block polymer ether, polyoxyethylene alkylamine, polyoxyethylene fatty acid amide, polyoxyethylene fatty acid bisphenyl ether, polyoxyethylene benzylphenyl (or phenylphenyl) ether, polyoxyethylene styrylphenyl (or phenylphenyl) ether, polyoxyethylene castor oil, polyoxyethylene hydrogenated castor oil, and alkyl glycosides.

Examples of the anionic surfactants include sulfates such as alkyl sulfate, polyoxyethylene alkyl ether sulfate, polyoxyethylene alkylphenyl ether sulfate, polyoxyethylene benzyl (or styryl) phenyl (or phenylphenyl) ether sulfate, polyoxyethylene/polyoxypropylene block polymer sulfate; sulfonates such as paraffin (alkane) sulfonate, α-olefin sulfonate, dialkyl sulfosuccinate, alkylbenzene sulfonate, mono- or dialkyl naphthalene sulfonate, naphthalene sulfonate-formalin condensate, alkyl diphenyl ether disulfonate, lignin sulfonate, polyoxyethylene alkyl phenyl ether sulfonate, and polyoxyethylene alkyl ether sulfosuccinic acid half ester; carboxylates such as fatty acids, resin acids, polycarboxylic acids, alkyl ether carboxylates, alkenyl succinic acids, N-acylamino acid, and naphthenic acid; and phosphates such as polyoxyethylene alkyl ether phosphate, polyoxyethylene mono- or dialkyl phenyl ether phosphate, polyoxyethylene benzyl (or styryl) phenyl (or phenylphenyl) ether phosphate, polyoxyethylene/polyoxypropylene block polymer phosphates, and alkyl phosphates.

Examples of the cationic surfactant include salts of amines such as alkylamines and alkyl pentamethyl propylene diamine; salts of ammoniums such as alkyltrimethylammonium, methyl polyoxyethylene alkylammonium, methyl polyoxyethylene alkylammonium, alkyl pyridinium, mono- or di-alkyl methylated ammonium, alkyl dimethyl benzalkonium and benzethonium (octylphenoxy ethoxy ethyl dimethyl benzylammonium).

Examples of the amphoteric surfactant include dialkyldiamino ethyl betaine, alkyl dimethyl benzyl betaine, and lecithin (e.g., phosphatidylcholine and phosphatidylethanolamine).

Examples of the silicone surfactant include trisiloxane ethoxylate.

Examples of the fluorosurfactant include perfluoroalkyl carboxylates, perfluoroalkyl sulfonates, and perfluoroalkyl trimethylammonium salts.

Examples of the biosurfactant include sophorolipids, rhamnolipids, trehalose lipids, mannosyl alditol lipids, cellobiose lipids, glucose lipids, oligosaccharide fatty acid esters, spiculisporic acids, corynomycolic acids, agaritic acids, surfactins, serrawettins, viscosins, lichenysins, arthrofactins, emulsans, and alasans.

Examples of other formulation aids include inorganic salts used as pH adjusters (e.g., sodium and potassium); water-soluble salts such as common salt; xanthan gum, guar gum, carboxymethyl cellulose, polyvinylpyrrolidone, carboxyvinyl polymers, acrylic polymers, polyvinyl alcohols, starch derivatives, water-soluble polymers (e.g., polysaccharides), alginic acid and salts thereof, which are used as thickeners; metal stearates, sodium tripolyphosphate, and sodium hexametaphosphate, which are used as disintegrating dispersants; benzoic acid and salts thereof, sorbic acid and salts thereof, propionic acid and salts thereof, p-hydroxy benzoic acid, methyl p-hydroxy benzoate, 1 ,2-bentzthiazolin3-one, which are used as preservatives; sodium polyphosphate, sodium polyacrylate, sodium lignosulphonate, sodium citrate, sodium gluconate/glucoheptonate, ethylene diamine tetraacetic acid and disodium and ammonium salts thereof, which are used as sequesterants; pigments and dyes used as colorants, fluorine-based defoamers, silicone-based defoamers, and ethylene oxide/propylene oxide copolymers, which are used as defoamers; phenol-based antioxidants, amine-based antioxidants, sulfur-based antioxidants, and phosphoric acid-based antioxidants, which are used as antioxidants; salicylic acid-based UV absorbers and benzophenone-based UV absorbers, which are used as UV absorbers; quicklime and magnesium oxide, which are used as desiccants; and adjuvants and chemical damage reducers and deterioration inhibitors.

The content of the active ingredient in the plant growth regulator according to the present embodiment may be 0.1 ppm or greater, or 1 ppm or greater. Furthermore, the used amount of the extract of the ergothioneine-producing microorganisms may be 0.0001 kg or greater, and 0.001 kg or greater, per 1 ha of an agricultural or horticultural area, such as fields, paddy fields, orchards, and greenhouses. The concentration and used amount of active ingredients can be increased or decreased without regard to the above range, as it depends on the formulation, time of use, method of use, location of use, and target crops.

### (Other active ingredients)

The plant growth regulator according to the present embodiment may be used in combination with other known active ingredients to enhance the performance as a plant growth regulator. Examples of the other known active ingredients include active ingredients contained in known plant growth regulators, fungicides, insecticides, miticides, nematicides, and herbicides.

Examples of the active ingredients of known plant growth regulators include oxidized glutathione, L-glutamic acid, L-proline, aminoethoxyvinylglycine, chlormequat, chlorpropham, cyclanilide, dikegulac, daminozide, ethephon, flurprimidol, flumetralin, forchlorfenuron, gibberellin, maleic hydrazide salt, mepiquat chloride, methylcyclopropene, benzylaminopurine, paclobutrazol, prohexadione, thidiazuron, tributyl phosphorotrithioate, trinexapac-ethyl, uniconazole, sodium 1-naphthaleneacetate, 1-naphthylacetamide, 1-methylcyclopropene, 4-chlorophenoxyacetic acid (4-CPA), 4-(4-chloro-2-methylphenoxy)butyric acid ethyl ester (MCPB), isoprothiolane, itaconic acid, indolebutyric acid, ethychlozate, calcium formate, chlormequat, choline, cyanamide, dichlorprop, gibberellin, daminozide, decyl alcohol, sorbitan trioleate, nicosulfuron, pyraflufen-ethyl, butralin, prohydrojasmon, anisiflupurin, and pendimethalin.

Examples of the active ingredients suitable for use in fungicides include nucleic acid metabolism inhibitors, fungicides acting on cytoskelton and motor proteins, respiration inhibitors, amino acid and protein synthesis inhibitors, signal transduction inhibitors, lipid synthesis or transport/membrane integrity or function inhibitors, sterol biosynthesis inhibitors, cell wall biosynthesis inhibitors, melanin synthesis inhibitors, host plant defence inducers, chemical multi-site inhibitors, and biologicals with multiple modes of action.

Examples of the nucleic acid metabolism inhibitors include benalaxyl, benalaxyl-M or kiralaxyl, furalaxyl, metalaxyl, metalaxyl-M or mefenoxam, ofurace, oxadixyl, bupirimate, dimethirimol, ethirimol, hymexazole, octhilinone, and oxolinic acid.

Examples of the fungicides acting on cytoskelton and motor proteins include benomyl, carbendazim, fuberidazole, thiabendazole, thiophanate, thiophanate-methyl, diethofencarb, ethaboxam, pencycuron, zoxamide, fluopicolide, fluopimomide, phenamacril, metrafenone, and pyriofenone.

Examples of the respiration inhibitors include diflumetorim, fenazaquin, tolfenpyrad, benodanil, benzovindiflupyr, bixafen, boscalid, carboxin, fenfuran, flubeneteram, fluindapyr, fluopyram, flutolanil, fluxapyroxad, furametpyr, inpyrfluxam, isofetamid, isoflucypram, isopyrazam, mepronil, oxycarboxin, penflufen, penthiopyrad, pydiflumetofen, pyrapropoyne, pyraziflumid, sedaxane, thifluzamide, azoxystrobin, coumoxystrobin, dimoxystrobin, enestrobin, enoxastrobin, famoxadone, fenamidone, fenaminstrobin, flufenoxystrobin, fluoxastrobin, kresoxim-methyl, mandestrobin, metominostrobin, metyltetraprole, orysastrobin, picoxystrobin, pyraclostrobin, pyrametostrobin, pyraoxystrobin, pyribencarb, triclopyricarb, trifloxystrobin, amisulbrom, cyazofamid, fenpicoxamid, florylpicoxamid, metarylpicoxamid, binapacryl, dinocap, fluazinam, meptyldinocap, fentin acetate, fentin chloride, fentin hydroxide, silthiofam, and ametoctradin.

Examples of the amino acid and protein synthesis inhibitors include cyprodinil, mepanipyrim, pyrimethanil, blasticidin-S, kasugamycin, streptomycin, and oxytetracycline.

Examples of the signal transduction inhibitors include proquinazid, quinoxyfen, fludioxonil, chlozolinate, dimethachlone, fenpiclonil, iprodione, procymidone, and vinclozolin.

Examples of the lipid synthesis or transport/membrane integrity or function inhibitors include edifenphos (EDDP), iprobenfos (IBP), isoprothiolane, pyrazophos, biphenyl, chloroneb, dicloran (CNA), etridiazole, quintozene (PCNB), tecnazene (TCNB), tolclofos-methyl, iodocarb, propamocarb, prothiocarb, extracts of Melaleuca alternifolia (tea tree), plant oil mixtures (eugenol, geraniol, thymol), natamycin (pimaricin), fluoxapiprolin, and oxathiapiprolin.

Examples of the sterol biosynthesis inhibitors include azaconazole, bitertanol, bromuconazole, cyproconazole, difenoconazole, diniconazole, epoxiconazole, etaconazole, fenbuconazole, fluoxytioconazole, fluquinconazole, flusilazole, flutriafol, hexaconazole, imazalil, imibenconazole, ipconazole, ipfentrifluconazole, mefentrifluconazole, metconazole, myclobutanil, oxpoconazole, pefurazoate, penconazole, prochloraz, propiconazole, prothioconazole, simeconazole, tebuconazole, tetraconazole, triadimefon, triadimenol, triflumizole, triticonazole, fenarimol, nuarimol, pyrifenox, pyrisoxazole, triforine, methyl (2RS)-2-[2-chloro-4-(4-chlorophenoxy)phenyl]-2-hydroxy-3-(1H-1,2,4-triazol-1-yl)propanoate, 1-((1H-1,2,4-triazol-1-yl)methyl)-5-(4-chlorobenzyl)-2-(chloromethyl)-2-methylcyclopentan-1 -ol, methyl-2-((1H-1,2,4-triazol-1 -yl)methyl)-3-(4-chlorobenzyl)-2-hydroxy-1-methylcyclopentane-1-carboxylate, aldimorph, dodemorph, fenpropimorph, tridemorph, fenpropidin, piperalin, spiroxamine, fenhexamid, fenpyrazamine, pyributicarb, naftifine, and terbinafine.

Examples of the cell wall biosynthesis inhibitors include polyoxin, benthiavalicarb (benthiavalicarb-isopropyl), dimethomorph, flumorph, iprovalicarb, mandipropamid, pyrimorph, and valifenalate.

Examples of the melanin synthesis inhibitors include fthalide, pyroquilon, tricyclazole, carpropamid, diclocymet, fenoxanil, and tolprocarb.

Examples of the host plant defence inducers include acibenzolar-S-methyl, probenazole, tiadinil, isotianil, laminarin, Reynoutria sachalinensis extracts, Bacillus mycoides isolate J, cell wall of Saccharomyces cerevisiae strain LAS117, fosetyl (fosetyl-aluminum, fosetyl potassium, fosetyl sodium), phosphorous acid and salts thereof, and dichlobentiazox.

Examples of the chemical multi-site inhibitors include ferbam, mancozeb, maneb, metiram, propineb, thiram, zinc thiazole, zineb, ziram, amobam, anilazine, dithianon, dichlofluanid, tolylfluanid, guazatine, iminoctadine acetate, iminoctadine albesilate, copper or various copper salts (e.g., copper oxychloride, copper(II) hydroxide, copper hydroxide sulfate, copper sulfate, organocopper (oxine-copper), nonyl phenol sulfonic acid copper, DBEDC), sulfur, captan, captafol, folpet, chlorothalonil (TPN), quinoxaline (chinomethionat), fluoroimide, and methasulfocarb.

Examples of the biologicals with multiple modes of action include Bacillus subtilis strain AFS032321, Bacillus amyloliquefaciens strain QST713, Bacillus amyloliquefaciens strain FZB24, Bacillus amyloliquefaciens strain MBI600, Bacillus amyloliquefaciens strain D747, Bacillus amyloliquefaciens strain F727, Clonostachys rosea strain CR-7, Gliocladium catenulatum strain J1446, Pseudomonas chlorophaphis strain AFS009, Streptomyces griseoviridis strain K61, Streptomyces lydicus strain WYEC108, Trichoderma atroviride strain I-1237, Trichoderma atroviride strain LU132, Trichoderma atroviride strain SC1,Trichoderma asperellum strain T34, extracts from Swinglea glutinosa and extracts from the cotyledons of lupine plantlets (BLAD).

Examples of other compounds for use in fungicides include chloroinconazide, seboctylamine, flumetylsulforim, flufenoxadiazam, cyflufenamid, cymoxanil, diclomezine, dipymetitrone, dodine, fenitropan, ferimzone, flusulfamide, flutianil, harpin, inorganic salts (hydrogen carbonates (sodium hydrogen carbonate, potassium hydrogen carbonate), potassium carbonate), ipflufenoquin, KINOPROL, materials of biological origin, machine oils, organic oils, picarbutrazox, pyridachlometyl, quinofumelin, tebufloquin, tecloftalam (bactericides), triazoxide, validamycin, aminopyrifene, and shiitake mycelium extracts.

Examples of the active ingredients suitable for use in insecticides, miticides, and nematicides include acetylcholinesterase (AChE) inhibitors, GABA-gated chloride channel blockers, sodium channel modulators, nicotinic acetylcholine receptor (nAChR) competitive modulators, nicotinic acetylcholine receptor (nAChR) allosteric modulators, glutamate-gated chloride channel (GluCI) allosteric modulators, juvenile hormone mimics, miscellaneous non-specific (multi-site) inhibitors, chordotonal organ TRPV channel modulators, mite growth inhibitors affecting CHS1, microbial disruptors of insect midgut membranes, inhibitors of mitochondrial ATP synthase, uncouplers of oxidative phosphorylation via disruption of the proton gradient, nicotinic acetylcholine receptor (nAChR) channel blockers, inhibitors of chitin biosynthesis affecting CHS1, inhibitors of chitin biosynthesis (type 1), molting disruptors (Dipteran), ecdysone receptor agonists, octopamine receptor agonists, mitochondrial complex III electron transport inhibitors, mitochondrial complex I electron transport inhibitors (METI), voltage-dependent sodium channel blockers, inhibitors of acetyl CoA carboxylase, mitochondrial complex IV electron transport inhibitors, mitochondrial complex II electron transport inhibitors, ryanodine receptor modulators, chordotonal organ modulators, GABA-gated chloride channel allosteric modulators, and baculoviruses.

Examples of the acetylcholinesterase (AChE) inhibitors include alanycarb, aldicarb, bendiocarb, benfuracarb, butocarboxim, butoxycarboxim, carbaryl (NAC), carbofuran, carbosulfan, ethiofencarb, fenobucarb (BPMC), fenothiocarb, formetanate, furathiocarb, isoprocarb (MIPC), methiocarb, methomyl, metolcarb (MTMC), oxamyl, pirimicarb, propoxur (PHC), thiodicarb, thiofanox, triazamate, trimethacarb, XMC, xylylcarb (MPMC), acephate, azamethiphos, azinphos-ethyl, azinphos-methyl, cadusafos, chlorethoxyfos, chlorfenvinphos (CVP), chlormephos, chlorpyrifos, chlorpyrifos-methyl, coumaphos, cyanophos (CYAP), demeton-S-methyl, diazinon, dichlorvos (DDVP), dicrotophos, dimethoate, dimethylvinphos, ethylthiomethon (disulfoton), EPN, ethion, ethoprophos, famphur, fenamiphos, fenitrothion (MEP), fenthion (MPP), fosthiazate, heptenophos, imicyafos, isofenphos, isopropyl O-(methoxyaminothio-phosphoryl)salicylate, isoxathion, malathon (malathion), mecarbam, methamidophos, methidathion (DMTP), mevinphos, monocrotophos, naled (BRP), omethoate, oxydemeton-methyl, parathion, methyl parathion (parathion-methyl), phenthoate (PAP), phorate, phosalone, phosmet (PMP), phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos (CVMP), thiometon, triazophos, trichlorfon (DEP), and vamidothion.

Examples of the GABA-gated chloride channel blockers include chlordane, benzoepin (endosulfan), dienochlor, ethiprole, fipronil, pyriprole, and nicofluprole.

Examples of the sodium channel modulators include acrinathrin, allethrin (d-cis-transallethrin, d-trans allethrin), bifenthrin, bioallethrin (bioallethrin, S-cyclopentenyl-isomers), bioresmethrin, chloroprallethrin, chlorfenson, cycloprothrin, cyfluthrin (cyfluthrin, β-isomers), cyhalothrin (cyhalothrin, λ-, γ-isomers), cypermethrin (cypermethrin, α-, β-, θ-, ζ-isomers), cyphenothrin [(1R)-trans-isomers], deltamethrin, dimefluthrin, empenthrin [(EZ)-(1R)-isomers], esfenvalerate, etofenprox, fenpropathrin, fenvalerate, flubrocythrinate, flucythrinate, flumethrin, fluvalinate (τ-fluvalinate), halfenprox, imiprothrin, kadethrine, metofluthrin, momfluorothrin, epsilon-metofluthrin, epsilon-momfluorothrin, permethrin, phenothrin [(1R)-trans-isomer], prallethrin, profluthrin, pyrethrin, resmethrin, silafluofen, tefluthrin, phthalthrin (tetramethrin), tetramethrin [(1R)-isomers], tralomethrin, transfluthrin, DDT, methoxychlor, aldrin, dieldrin, and lindane (lindene).

Examples of the nicotinic acetylcholine receptor (nAChR) competitive modulators include acetamiprid, clothianidin, dinotefuran, imidacloprid, nitenpyram, thiacloprid, thiamethoxam, nicotine sulfate (nicotine), sulfoxaflor, flupyradifurone, dicloromezotiaz, fenmezoditiaz, and triflumezopyrim.

Examples of the nicotinic acetylcholine receptor (nAChR) allosteric modulators include spinetoram, spinosad, flupyrimin, and GS-omega/kappa HXTX-Hv1a peptide.

Examples of the glutamate-gated chloride channel (GluCI) allosteric modulators include abamectin, emamectin benzoate, lepimectin, and milbemectin.

Examples of the juvenile hormone mimics include hydroprene, kinoprene, methoprene, fenoxycarb, and pyriproxyfen.

Examples of miscellaneous nonspecific (multi-site) inhibitors include methyl bromide, other alkyl halides, chloropicrin, sodium aluminum fluoride, sulfuryl fluoride, borax, boric acid, disodium octaborate, sodium metaborate, tartar emetic, dazomet, carbam (metam-ammonium), metam-sodium (carbam sodium), and methyl isothiocyanate.

Examples of the chordotonal organ TRPV channel modulators include pymetrozine, pyrifluquinazon, and afidopyropen.

Examples of the mite growth inhibitors affecting CHS1 include clofentezine, diflovidazin, hexythiazox, and etoxazole.

Examples of the microbial disruptors of insect midgut membranes include Bacillus thuringiensis subsp. israelensis, Bacillus thuringiensis subsp. aizawai, Bacillus thuringiensis subsp. kurstaki, Bacillus thuringiensis subsp. tenebrionis, B. t. proteins contained in crops (Cry1Ab, Cry1Ac, Cry1Fa, Cry1A.105, Cry2Ab, Vip3A, mCry3A, Cry3Bb, Cry34Ab1/Cry35Ab1), and Bacillus sphaericus.

Examples of the inhibitors of mitochondrial ATP synthase include diafenthiuron, azocyclotin, tricyclohexyltin hydroxide (cyhexatin), fenbutatin oxide, propargite (BPPS), and tetradifon.

Examples of the uncouplers of oxidative phosphorylation via disruption of proton gradient include chlorfenapyr, DNOC, and sulfluramid.

Examples of the nicotinic acetylcholine receptor (nAChR) channel blockers include bensultap, cartap hydrochloride, thiocyclam, thiosultap sodium, and monosultap.

Examples of the inhibitors of chitin biosynthesis affecting CHS1 include bistrifluron, chlorfluazuron, diflubenzuron, flucycloxuron, flufenoxuron, hexaflumuron, lufenuron, novaluron, noviflumuron, teflubenzuron, and triflumuron.

Examples of the inhibitors of chitin biosynthesis (type 1) include buprofezin.

Examples of the molting disruptors (Dipteran) include cyromazine.

Examples of the ecdysone receptor agonists include chromafenozide, halofenozide, methoxyfenozide, and tebufenozide.

Examples of the octopamine receptor agonists include amitraz.

Examples of the mitochondrial complex III electron transport inhibitors include hydramethylnon, acequinocyl, fluacrypyrim, and bifenazate.

Examples of the mitochondrial complex I electron transport inhibitors (METI) include fenazaquin, fenpyroximate, pyridaben, pyrimidifen, tebufenpyrad, tolfenpyrad, and derris (rotenone).

Examples of the voltage-dependent sodium channel blockers include indoxacarb and metaflumizone.

Examples of the inhibitors of acetyl CoA carboxylase include spirodiclofen, spiromesifen, spiropidion, spidoxamat, and spirotetramat.

Examples of the mitochondrial complex IV electron transport inhibitors include aluminum phosphide, calcium phosphide, phosphine, zinc phosphide, prussic acid (calcium cyanide, sodium cyanide), and potassium cyanide.

Examples of the mitochondrial complex II electron transport inhibitors include cyenopyrafen, cyetpyrafen, cyflumetofen, pyflubumide, and cyclobutrifluram.

Examples of the ryanodine receptor modulators include chlorantraniliprole, cyantraniliprole, cyclaniliprole, flubendiamide, tetraniliprole, fluchlordiniliprole, tetrachlorantraniliprole, cyhalodiamide, and cyproflanilide.

Examples of the chordotonal organ modulators include flonicamid.

Examples of the GABA-gated chloride channel allosteric modulators include broflanilide, fluxametamide, and isocycloseram.

Examples of the baculoviruses include codling moth (Cydia pomonella GV), false codling moth (Thaumatotibia leucotreta GV), velvetbean caterpillar (Anticarsis gemmatalis MNPV), and cotton bollworm (Helicoverpa armigera NPV).

Examples of other insecticides, miticides, and nematicides include azadirachtin, benzomate (benzoximate), phenisobromolate (bromopropylate), quinoxaline system (chinomethionate), kelthane (dicofol), lime sulfur, mancozeb, pyridalyl, sulfur, acynonapyr, amidoflumet, benzpyrimoxan, fluazaindolizine, fluensulfone, fluhexafon, flupentiofenox, flometoquin, metaldehyde, tyclopyrazoflor, dimpropyridaz, trifluenfuronate, indazapyroxamet, Burkholderia spp., Wolbachia pipientis (Zap), Chenopodium ambrosioides near ambrosioides extracts, fatty acid monoesters with glycerol or propanediol, neem oil, machine oil, rapeseed oil, blended oils (safflower and cottonseed oil), starch, saccharified reduced starch, sodium oleate, ferric phosphate, nemadectin, Beauveria bassiana strains, Metarhizium anisopliae strain (F52), Paecilomyces fumosoroseus Apopka strain (97), diatomaceous earth, dichlorodiisopropyl ether (DCIP), 1 ,3-dichloropropene (D-D), levamisole hydrochloride, morantel tartrate, and tioxazafen.

Examples of effective components suitable for herbicidal use include acetolactate synthase (ALS) inhibitor compounds, amino acid compounds, cyclohexanedione compounds, acetamide compounds, bipyridinium compounds, allyloxyphenoxypropionic acid compounds, carbamates compounds, pyridine compounds, urea compounds, dinitroaniline compounds, protoporphyrinogen oxidase (PPO) inhibitor compounds, phenoxyacetic acid compounds, hydroxyphenylpyruvate dioxygenase enzyme (HPPD) inhibitor compounds, and triazine compounds.

Examples of the acetolactate synthesis (ALS) inhibitor compounds include imazamethabenz and imazamethabenz-methyl, imazamox, imazapic, imazapyr, imazaquin, imazethapyr, amidosulfuron, azimsulfuron, bensulfuron and bensulfuron-methyl, chlorimuron and chlorimuron-methyl, chlorimuron-ethyl, chlorsulfuron, cinosulfuron, cyclosulfamuron, ethametsulfuron and ethametsulfuron-methyl, ethoxysulfuron, flazasulfuron, flucetosulfuron, flupyrsulfuron, flupyrsulfuron-methyl and salts thereof, foramsulfuron, halosulfuron, halosulfuron-methyl, imazosulfuron, iodosulfuron and salts thereof, iodosulfuron-methyl and salts thereof, mesosulfuron, mesosulfuron-methyl, metazosulfuron, metsulfuron, metsulfuron-methyl, nicosulfuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron and salts thereof, triflusulfuron, triflusulfuron-methyl, tritosulfuron, imazamethabenz, bispyribac-sodium, cloransulam, cloransulam-methyl, diclosulam, florasulam, flucarbazone and salts thereof, flumetsulam, metosulam, orthosulfamuron, penoxsulam, pyroxsulam, propoxycarbazone and salts thereof, pyribenzoxim, pyriftalid, pyriminobac-methyl, pyrimisulfan, pyrithiobac and salts thereof, pyroxsulam, thiencarbazone, thiencarbazone-methyl, and triafamone.

Examples of the amino acid compounds include bialaphos and salts thereof, glufosinate and salts thereof, glufosinate P and salts thereof, and glyphosate and salts thereof.

Examples of the cyclohexanedione compounds include alloxydim, butroxydim, clethodim, cloproxydim, cycloxydim, profoxydim, sethoxydim, tepraloxydim, and tralkoxydim.

Examples of the acetamide compounds include napropamide, dimethachlor, pethoxamid, acetochlor, alachlor, allidochlor (CDAA), butenachlor, delachlor, diethatyl-ethyl, propisochlor, prynachlor, butachlor, dimethenamid, dimethenamid-P, metazachlor, metolachlor, S-metolachlor, pretilachlor, propachlor, thenylchlor, flufenacet, and mefenacet.

Examples of the bipyridinium compounds include cyperquat, morfamquat, diquat, and paraquat.

Examples of the allyloxyphenoxypropionic acid compounds include clodinafop, clodinafop-propargyl, clofop, cyhalofop-butyl, diclofop, diclofop-methyl, diclofop-P-methyl, fenoxaprop, fenoxaprop-ethyl, fenoxaprop-P-ethyl, fluazifop, fluazifop-butyl, fluazifop-P-butyl, haloxyfop, haloxyfop-methyl, haloxyfop-P-methyl, isoxapyrifop, metamifop, propaquizafop, quizalofop, quizalofop-ethyl, quizalofop-P-ethyl, and quizalofop-P-tefuryl.

Examples of the carbamate compounds include asulam, carbetamide, desmedipham, chlorprocarb, phenisopham, cycloate, dimepiperate, bebulate, tiocarbazil, vernolate, barban, chlorbufam, chlorpropham, propham, swep, phenmedipham, butylate, EPTC, esprocarb, molinate, orbencarb, prosulfocarb, pyributicarb, thiobencarb (benthiocarb) and tri-allate.

Examples of the pyridine compounds include aminopyralid, clopyralid, diflufenican, dithiopyr, fluridone, fluroxypyr, halauxifen, florpyrauxifen, picloram and salts thereof, picolinafen, thiazopyr, and triclopyr and salts thereof.

Examples of the urea compounds include benzothiazolone, bromuron, buturon, chlorbromuron, chloroxuron, difenoxuron, dimefuron, ethidimuron, fenuron, fluothiuron, metobenzuron, metobromuron, metoxuron, monolinuron, monuron (CUM), neburon, parafluron, siduron, thiazafluron, chlorotoluron, dymron, diuron (DCMU), fluometuron, isoproturon, linuron, methabenzthiazuron, tebuthiuron, cumyluron, karbutilate, and isouron.

Examples of the dinitroaniline compounds include benfluralin (bethrodine), butralin, dinitramine, ethalfluralin, fluchloralin, isopropalin, nitralin, profluralin, oryzalin, pendimethalin, prodiamine, and trifluralin.

Examples of the protoporphyrinogen oxidase (PPO) inhibitor compounds include acifluorfen, aclonifen, azafenidin, bifenox, chlomethoxynil, ethoxyfen, ethoxyfen-ethyl, fomesafen, fluazolate, fluoroglycofen, fluoroglycofen-ethyl, halosafen, lactofen, oxyfluorfen, butafenacil, epyrifenacil, chlornitrofen (CNP), fluorodifen, fluoronitrofen (CFNP), nitrofen (NIP), oxyfluorfen, chlorphthalim, flumipropyn, carfentrazone, carfentrazone-ethyl, cinidon-ethyl, flumiclorac-pentyl, flumioxazin, fluthiacet, fluthiacet-methyl, oxadiargyl, oxadiazon, pentoxazone, pyraclonil, pyraflufen, pyraflufen-ethyl, saflufenacil, sulfentrazone, thidiazimin, benzfendizone, profluazol, and flufenpyr-ethyl.

Examples of the phenoxyacetic acid compound include 2,4,5-T, 2,4-D and salts thereof, 2,4-DB and salts thereof, clomeprop, dichlorprop, fenoprop, MCPA and salts thereof, MCPB and salts thereof, mecoprop (MCPP) and salts thereof, and mecoprop-P and salts thereof.

Examples of the hydroxyphenylpyruvate dioxygenase enzyme (HPPD) inhibitor compounds include benzobicyclon, benzofenap, bicyclopyrone, isoxaflutol, mesotrione, pyrasulfotol, pyrazolynate (pyrazolate), pyrazoxyfen, sulcotrione, tefuryltrione, tembotrione, topramezone, fenquinotrione, and tolpyralate.

Examples of the triazine compound include atraton, aziprotryn, chlorazine, cyprazine, desmetryn, dipropetryn, eglinazine-ethyl, ipazine, methoprotryne, procyazine, proglinazine, prometon, propazine, sebuthylazine, secbumeton, terbumeton, trietazine, ametryn, atrazine, cyanazine, dimethametryn, hexazinone, indaziflam, metamitron, metribuzin, prometryn, simazine (CAT), simetryn, terbuthylazine, terbutryn, and triaziflam.

Examples of other compounds for herbicidal use include amicarbazone, ethiozin, isomethiozin, aminocyclopyrachlor, aminotriazole, anilofos, piperophos, beflubutamid, benazolin, benfuresate, bentazone, bromacil, isocil, bromobutide, bromofenoxim, bromoxynil, butamifos, DMPA, chlorthal-dimethyl (TCTP), cafenstrole, chloridazon (PAC), brompyrazon, chlorthal, clomazone, bixiszolone, cumyluron, dicamba (MDBA) and salts thereof, chloramben, 2,3,8-TBA (TCBA), benazolin-ethyl, chlofenac, chlorfenprop, dichlobenil (DBN), chlorthiamid (DCBN), cinmethylin, methiozolin, amitrol, flamprop-M, fosamine, methyldymron, monalide, MSMA, difenzoquat, diflufenzopyr, endothall and salts thereof, ethofumesate, etobenzanid, fenoxasulfone, fentrazamide, flupoxam, fluorochloridone, flurtamone, indanofan, tridiphane, ioxynil, ipfencarbazone, isoxaben, triaziflam, lenacil, methylarsonic acid, naptalam, flurochloridone, norflurazon, oxaziclomefone, pinoxaden, chloranocryl=dicryl, pentanochlor (CMMP), propanil, propyzamide, pyridate, pyroxasulfone, promacyl, quinclorac, quinmerac, quinoclamine, terbacil, cyclopyrimorate, florpyrauxifen-benzyl, lancotrione and salts thereof, cyclopyranil, bixlozone, tetflupyrolimet, dimesulfazet, dinosam, dinoseb (DNBP), DNOC, dinoterb, etinofen, medinoterb, DSMA, oleic acid, pelargonic acid, cacodylic acid, diphenamid, naproanilide, tebutam, bensulide, dalapon, TCA, mefluidide, perfluidone, CAMA, tiafenacil, trifludimoxazin, rimisoxafen, fenpyrazone, dioxopyritrione, cypyrafluone, bipyrazone, benquitrione, tetrapion (flupropanate) and salts thereof, and d-limonene.

### Method for promoting plant growth

The plant growth regulator according to the present embodiment can be used, for example, in cultivated lands such as fields, paddy fields, lawns, and orchards or non-cultivated lands. The plant growth regulators according to the present embodiment can be used by all methods of fertilization, such as foliar application, mixing into water supply, spraying on soil, injecting into subsoil using an injector, seed treatment including treatment of bulbs and tubers, and direct fertilization to plants. Therefore, the method for promoting plant growth according to the present embodiment includes a procedure for fertilizing using the above-mentioned plant growth regulator.

In the case of application by mixing into water supply, for example, water is fed to the crop, or the water surface of a paddy field may be treated with granules or the like. In one example, the concentration of the active ingredient in the feed water is from 0.1 mg/L or greater and preferably 1 mg/L or greater. The amount of the active ingredient used when administered to paddy water is, for example, 0.1 g or greater, and preferably 1 g or greater, per 10 a of paddy field.

In the case of application by foliar application or spraying on soil, for example, a planting hole or the vicinity thereof may be treated with granules at the time of the transplantation of seedling, or seeds, plants, or the earth around plants may be treated with granules and a wettable powder. In addition, it may be preferable to mix with soil after spraying on the soil. The amount of the active ingredient used for foliar application or spraying on soil surface is, for example, 0.1 mg or greater, and preferably 1 mg or greater, per 1 m² of agricultural or horticultural area.

In seed treatment, the agent is applied to the seeds by mixing and stirring a wettable powder and a dustable powder with the seeds or by dipping the seeds in a diluted wettable powder. Seed treatments also include seed coating treatments. The amount of active ingredients used in the case of seed treatment is, for example, 0.005 g or greater, and preferably 0.05 g or greater, per 100 kg of the seeds. Seeds treated with agricultural or horticultural chemicals can be used in the same way as common seeds.

Additionally, since the concentration and quantity used differ depending on the form of the agent, time of use, usage method, usage location, target crops and the like, they may be increased or decreased within the above ranges.

### [Use of plant growth regulator]

The plant growth regulator according to this embodiment exhibits an excellent growth promoting effect in treated plants, as described above. Therefore, the plant growth regulator according to this embodiment can be used, for example, as biostimulants. The plant growth regulator in this embodiment may also be mixed with fertilizers, soil conditioners, and pesticides for use.

In the present specification, the function of a "biostimulant" is primarily intended to mean a agent that acts on plant physiology through a different pathway from fertilizers for the purpose of improving crop vitality, yield, and quality and is different from the function of a "fertilizer". "Fertilizer" is "a material that is applied to soil cultivation or water cultivation to supply nutrients to plants" and is a material that supplements nutrients required for a plant. In a case where a plant is malnourished, supply of fertilizers has an effect of improving the nutritional state of the plant; however, in a case where the nutrient of the plant is sufficient to a certain degree, this effect cannot be expected.

### [Summary]

The plant growth regulator according to the present embodiment contains an extract of an ergothioneine-producing microorganism as an active ingredient, and the extract contains ergothioneine.

In the plant growth regulator according to the present embodiment, the extract may be a hot water extraction product.

In the plant growth regulator according to the present embodiment, the ergothioneine-producing microorganism may be at least one type of microorganism selected from the group consisting of microorganisms belonging to the genus Apiotrichum, microorganisms belonging to the genus Dirkmeia, microorganisms belonging to the genus Papiliotrema, microorganisms belonging to the genus Pseudozyma, microorganisms belonging to the genus Ustilago, microorganisms belonging to the genus Methylobacterium, microorganisms belonging to the genus Aureobasidium, microorganisms belonging to the genus Rhodotorula, microorganisms belonging to the genus Rhodosporidiobolus, microorganisms belonging to the genus Vanrija, microorganisms belonging to the genus Pleurotus, microorganisms belonging to the genus Aspergillus, microorganisms belonging to the genus Streptomyces, microorganisms belonging to the genus Actinomyces, microorganisms belonging to the genus Mycobacterium, microorganisms belonging to the genus Corynebacterium, microorganisms belonging to the genus Escherichia, microorganisms belonging to the genus Enterobacter, microorganisms belonging to the genus Pantoea, microorganisms belonging to the genus Klebsiella, microorganisms belonging to the genus Salmonella, microorganisms belonging to the genus Schizosaccharomyces, microorganisms belonging to the genus Saccharomyces, microorganisms belonging to the genus Chlorobium, microorganisms belonging to the genus Candida, microorganisms belonging to the genus Penicillium, microorganisms belonging to the genus Neurospora, microorganisms belonging to the genus Claviceps, microorganisms belonging to the genus Moniliella, microorganisms belonging to the genus Cryptococcus, microorganisms belonging to the genus Pycnoporus, microorganisms belonging to the genus Pleurotus, microorganisms belonging to the genus Flammulina, microorganisms belonging to the genus Leucopaxillus, microorganisms belonging to the genus Phellinus, microorganisms belonging to the genus Tricholoma, microorganisms belonging to the genus Coprinus, microorganisms belonging to the genus Hericium, microorganisms belonging to the genus Lyophyllum, microorganisms belonging to the genus Rozites, microorganisms belonging to the genus Pholiota, microorganisms belonging to the genus Mycoleptodonoides, microorganisms belonging to the genus Agrocybe, microorganisms belonging to the genus Grifola, and microorganisms belonging to the genus Agaricus.

In the plant growth regulator according to the present embodiment, the ergothioneine-producing microorganism may be at least one microorganism selected from the group consisting of Apiotrichum porosum, Dirkmeia churashimaensis, Papiliotrema flavescens, and Pseudozyma siamensis.

In the method for promoting plant growth according to the present embodiment includes treating a plant with the plant growth regulator described above.

The plant growth regulator according to the present embodiment may be an agent for increasing seed yield, an agent for increasing plant height, an agent for increasing flower number, an agent for increasing flower number, an agent for increasing aboveground part weight, or an agent for increasing underground part weight.

Embodiments of the present invention will be described in further detail hereinafter using examples. The present invention is not limited to the examples below, and it goes without saying that various aspects are possible with regard to the details thereof. Furthermore, the present invention is not limited to the embodiments described above, and various modifications are possible within the scope indicated in the claims. Embodiments obtained by appropriately combining the technical means disclosed by the embodiments are also included in the technical scope of the present invention. In addition, all of the documents described in the present specification are herein incorporated by reference.

### [Examples]

In the following Examples, the symbol "%" represents % by mass, unless otherwise indicated.

### Production Example 1: Preparation of hot water extraction product of ergothioneine-producing microorganisms

### (1) Preculture

Ergothioneine-producing microorganisms were inoculated into a YM culture medium and cultured at 200 rpm at 25°C for 2 to 3 days. A test tube was used in the culture. As the ergothioneine-producing microorganisms, Papiliotrema flavescens, Pseudozyma siamensis, Apiotrichum porosum, Dirkmeia churashimaensis, or Rhodosporidiobolus azoricus was used.

Into 50 mL of YM culture medium, 0.5 mL of the obtained culture solution was inoculated and cultured at 200 rpm at 25°C for 2 days. A 300 mL flask was used in the culture.

### (2) Main culture

Into 2 L of YM culture medium, 100 mL of the culture solution obtained in the preculture was inoculated and cultured at 400 rpm at 25°C for 5 days. A 5 L jar fermenter was used in the culture. The ventilation volume was 2 L/min (1 vvm).

### (3) Microbial cell collection

The culture solution obtained by the main culture was subjected to centrifugal separation at 6000 to 9000 rpm at 4°C for 10 to 60 minutes, and a supernatant was removed. The microbial cell pellets were collected, washed with pure water, and then subjected to centrifugal separation, and thus a supernatant was removed. After the removal of the supernatant, microbial cell pellets were collected and lyophilized.

### (4) Hot water extraction

The lyophilized microbial cells were suspended in 20 mL of pure water. The suspension was heated at 96°C for 15 minutes. After cooling to room temperature, centrifugal separation was performed at 6000 to 9000 rpm at 4°C for 5 to 10 minutes, and a supernatant was collected. In the precipitates after the separation, 10 mL of pure water was added and the precipitates were suspended by using a vortex mixer, heated, and subjected to centrifugal separation, and thus a supernatant was obtained. This process was repeated 2 to 4 times, and the collected supernatant was taken as a hot water extraction product.

### Evaluation Example 1: Comparison of seed yield of Arabidopsis thaliana

One individual Arabidopsis thaliana (Col-0) was sown in a plastic pot having a diameter of 60 mm and a height of 55 mm. Plastic deep dishes each having a diameter of 160 mm and a height of 28 mm were prepared, and six pots were respectively placed therein. As soil, 45 mL of vermiculite, 22.5 mL of granular soil (Kumiai horticultural soil), and 22.5 mL of vermiculite were placed in the pot in this order.

In a thermostatic chamber set at room temperature of 22°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 lx in the central part under irradiation with the fluorescent lamp. Water supply was conducted from the bottom, and the water level was set at about 5 mm. Chemical treatment was started 2 weeks after seeding. More specifically, on the 8th, 10th, 12th, and 14th days after seeding, 50 mL of the plant growth regulator was added instead of water supply.

As the plant growth regulator, the hot water extraction product prepared in Production Example 1 was used. Furthermore, for comparison, a plant growth regulator formed from 1 mM of ergothioneine aqueous solution was used.

On the 89th day after seeding, seeds were harvested, and the seed yield was evaluated. The evaluation results are shown in Table 1.

**[Table 1]**

| Sample name | EGT concentration | Seed yield | |
|---|---|---|---|
| | | ratio to untreated control | ratio to EGT |
| C-EGT-PFL | 0.82 mM | 1.5 | 1.2 |
| C-EGT-PSI | 1 mM | 1.9 | 1.6 |
| EGT | 1 mM | 1.2 | 1.0 |
| Untreated control | - | 1.0 | 0.8 |

In Table 1, "C-EGT-PFL" is a hot water extraction product of Papiliotrema flavescens. "C-EGT-PSI" is a hot water extraction product of Pseudozyma siamensis. "EGT" is ergothioneine, and a product that is commercially available as a reagent was used. "Untreated control" is only pure water.

As shown in Table 1, the extract of the ergothioneine-producing microorganisms resulted in a greater seed yield than those in the treatment with only ergothioneine and untreated control, and achieved excellent plant growth promoting effect.

### Evaluation Example 2: Comparison of seed yield of Arabidopsis thaliana

One individual Arabidopsis thaliana (Col-0) was sown in a plastic pot having a diameter of 60 mm and a height of 55 mm. Plastic deep dishes each having a diameter of 160 mm and a height of 28 mm were prepared, and six pots were respectively placed therein. As soil, 45 mL of vermiculite, 22.5 mL of granular soil (Kumiai horticultural soil), and 22.5 mL of vermiculite were placed in the pot in this order.

In a growth chamber set at room temperature of 22°C, the light period was 16 hours and the dark period was 8 hours. The light conditions were set such that the light intensity was 5000 lx in the central part under irradiation with the fluorescent lamp. Water supply was conducted from the bottom, and the water level was set at about 5 mm. Chemical treatment was started 2 weeks after seeding. More specifically, on the 8th, 10th, 12th, and 14th days after seeding, 50 mL of the plant growth regulator was added instead of water supply.

As the plant growth regulator, the hot water extraction product of Dirkmeia churashimaensis (C-EGT-DCH) prepared in Production Example 1 was used. Furthermore, for comparison, a plant growth regulator formed from 0.1 mM of ergothioneine aqueous solution was used.

On the 87th day after seeding, seeds were harvested, and the seed yield was evaluated. The evaluation results are shown in Table 2.

**[Table 2]**

| Sample name | EGT concentration | Seed yield | |
|---|---|---|---|
| | mM | ratio to untreated control | ratio to EGT |
| C-EGT-DCH | 0.1 | 1.4 | 1.1 |
| EGT | 0.1 | 1.3 | 1.0 |
| Untreated control | - | 1.0 | 0.8 |

As shown in Table 2, the extract of the ergothioneine-producing microorganisms resulted in a greater seed yield than those in the treatment with only ergothioneine and untreated control, and achieved excellent plant growth promoting effect.

### Evaluation Example 3: Comparison of plant height in the case where wheat and rapeseed were treated with each sample

In a 9 cm petri dish on which filter paper was spread, 10 mL of the plant growth regulator was added. Ten seeds of wheat or rapeseed were sown per one petri dish. In a thermostatic chamber set at room temperature of 25°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 lx in the central part under irradiation with the fluorescent lamp.

As the plant growth regulator, the hot water extraction product prepared in Production Example 1 was used. Furthermore, for comparison, a plant growth regulator formed from 1 mM of ergothioneine aqueous solution was used.

The plant height of the wheat or rapeseed on the 7th day after seeding was evaluated. The evaluation results are shown in Table 3.

**[Table 3]**

| Sample name | EGT concentration | Wheat plant height | | Rapeseed plant height | |
|---|---|---|---|---|---|
| | mM | ratio to untreated control | ratio to EGT | ratio to untreated control | ratio to EGT |
| C-EGT-DCH | 0.1 | 2.0 | 1.8 | 1.5 | 1.3 |
| C-EGT-PFL | 0.1 | 1.6 | 1.4 | 1.5 | 1.3 |
| C-EGT-APO | 0.1 | 1.4 | 1.2 | 1.5 | 1.4 |
| C-EGT-RAZ | 0.1 | 1.5 | 1.3 | 1.5 | 1.3 |
| C-EGT-SCE | 0 | 0.8 | 0.7 | 1.1 | 1.0 |
| EGT | 1 | 1.1 | 1.0 | 1.1 | 1.0 |
| Untreated control | - | 1.0 | 0.9 | 1.0 | 0.9 |

In Table 3, "C-EGT-DCH" is a hot water extraction product of Dirkmeia churashimaensis. "C-EGT-PFL" is a hot water extraction product of Papiliotrema flavescens. "C-EGT-APO" is a hot water extraction product of Apiotrichum porosum. "C-EGT-RAZ" is a hot water extraction product of Rhodosporidiobolus azoricus. "C-EGT-SCE" is a hot water extraction product of Saccharomyces cerevisiae, which is a yeast that does not produce ergothioneine. "EGT" is ergothioneine, and a product that is commercially available as a reagent was used. "Untreated control" is only pure water.

As shown in Table 3, the extract of the ergothioneine-producing microorganisms resulted in greater plant heights of the wheat and rapeseed than those in the treatment with only ergothioneine, treatment with the extract of the yeast that does not produce ergothioneine, and untreated control, and achieved excellent plant growth promoting effect.

### Evaluation Example 4: Comparison of number of flower of tomato

In a plastic pot having a square of 120 mm length and a height of 100 mm, 1 L of granular soil (Kumiai horticultural soil) was placed, and one individual tomato (Micro Tom) was sown in a pot.

In a thermostatic chamber set at room temperature of 25°C, the light period was 16 hours and the dark period was 8 hours. The light conditions were set using a fluorescent lamp (PLANT FLEC, 40 W LED fluorescent lamp for plant growth, electric bulb color, available from Nippon Medical and Chemical Instruments Co., Ltd.) such that the light intensity was 5000 lx in the central part under irradiation with the fluorescent lamp. Water supply was conducted from the bottom, and the water level was set at about 5 mm. Chemical treatment was started 4 weeks after seeding. More specifically, on the 25th, 27th, 29th, 31st, 33rd, 35th, and 37th days after seeding, 50 mL of the plant growth regulator was added instead of water supply.

As the plant growth regulator, the hot water extraction product of Pseudozyma siamensis (C-EGT-PSI) prepared in Production Example 1 was used. Furthermore, for comparison, a plant growth regulator formed from 0.1 mM of ergothioneine aqueous solution was used.

On the 64th day after seeding, the number of flowers was evaluated. The evaluation results are shown in Table 4.

**[Table 4]**

| Sample name | EGT concentration | Flower number | |
|---|---|---|---|
| | mM | ratio to untreated control | ratio to EGT |
| C-EGT-PSI | 0.1 | 1.5 | 1.2 |
| EGT | 0.1 | 1.3 | 1.0 |
| Untreated control | - | 1.0 | 0.8 |

As shown in Table 4, the extract of the ergothioneine-producing microorganisms resulted in a greater number of flowers than those in the treatment with only ergothioneine and untreated control, and achieved excellent plant growth promoting effect.

### Evaluation Example 5: Comparison of underground part weight of radish

In a plastic pot having a diameter of 100 mm and a height of 135 mm, 600 mL of granular soil (Kumiai horticultural soil) was placed, and one individual radish (Akamaru Hatsuka) was sown in a pot.

The radish was managed in a greenhouse set at room temperature of 25°C. Chemical treatment was started 2 weeks after seeding. More specifically, on the 10th, 12th, 14th, and 16th days after seeding, 50 mL of the plant growth regulator was added.

As the plant growth regulator, the hot water extraction product of Pseudozyma siamensis (C-EGT-PSI) prepared in Production Example 1 was used. Furthermore, for comparison, a plant growth regulator formed from 0.1 mM of ergothioneine aqueous solution was used.

On the 28th day after seeding, the underground part weight was evaluated. The evaluation results are shown in Table 5.

**[Table 5]**

| Sample name | EGT concentration | Underground part weight | |
|---|---|---|---|
| | mM | to untreated control | Ratio to EGT |
| C-EGT-PSI | 0.1 | 1.4 | 1.1 |
| EGT | 0.1 | 1.2 | 1.0 |
| Untreated control | - | 1.0 | 0.8 |

As shown in Table 5, the extract of the ergothioneine-producing microorganisms resulted in a greater underground part weight than those in the treatment with only ergothioneine and untreated control, and achieved excellent plant growth promoting effect.

### Production Example 2: Preparation of extract of ergothioneine-producing microorganisms by various extraction methods

### Methanol extraction

The microbial cells lyophilized in (3) Microbial cell collection of Production Example 1 were suspended in 20 mL of 50% aqueous methanol solution. After the suspension was shaken at room temperature for 1 hour, the suspension was subjected to centrifugal separation at 6000 rpm for 5 minutes, and the collected supernatant was used as a methanol extract.

### Acetone extraction

The microbial cells lyophilized in (3) Microbial cell collection of Production Example 1 were suspended in 20 mL of 50% aqueous acetone solution. After the suspension was shaken at room temperature for 1 hour, the suspension was subjected to centrifugal separation at 6000 rpm for 5 minutes, and the collected supernatant was used as an acetone extract.

### Acid extraction

The microbial cells lyophilized in (3) Microbial cell collection of Production Example 1 were suspended in 20 mL of 0.1 M sulfuric acid. After the suspension was shaken at room temperature for 1 hour, the suspension was subjected to centrifugal separation at 6000 rpm for 5 minutes, and the collected supernatant was used as an acid extract.

### Alkali extraction

The microbial cells lyophilized in (3) Microbial cell collection of Production Example 1 were suspended in 20 mL of 0.1 M aqueous sodium hydroxide solution. After the suspension was shaken at room temperature for 1 hour, the suspension was subjected to centrifugal separation at 6000 rpm for 5 minutes, and the collected supernatant was used as an alkali extract.

### Surfactant extraction

The microbial cells lyophilized in (3) Microbial cell collection of Production Example 1 were suspended in 20 mL of 1% aqueous sodium dodecyl sulfate solution. After the suspension was shaken at room temperature for 1 hour, the suspension was subjected to centrifugal separation at 6000 rpm for 5 minutes, and the collected supernatant was used as a surfactant extract.

### Freeze-thaw extraction

The microbial cells lyophilized in (3) Microbial cell collection of Production Example 1 were suspended in 20 mL of pure water. After the suspension was frozen at -20°C, the suspension was thawed and subjected to centrifugal separation at 6000 rpm for 5 minutes, and the collected supernatant was used as a freeze-thaw extract.

### Grinding extraction

The microbial cells lyophilized in (3) Microbial cell collection of Production Example 1 were ground using a mortar and then suspended in 20 mL of pure water. After the suspension was shaken at room temperature for 1 hour, the suspension was subjected to centrifugal separation at 6000 rpm for 5 minutes, and the collected supernatant was used as a grinding extract.

### Autoclave extraction

The culture solution obtained in (2) Main culture of Production Example 1 was subjected to autoclave treatment (temperature: 121 °C, pressure: 2 atm, treatment duration: 20 minutes), and then the supernatant was collected by centrifugal separation at 6000 rpm for 5 minutes, and the collected supernatant was used as an autoclave extract.

### Evaluation Example 6: Seed yield in the case where Arabidopsis thaliana was treated with extract of microorganisms obtained by various extraction methods

One individual Arabidopsis thaliana (Col-0) was sown in a plastic pot having a diameter of 60 mm and a height of 55 mm. Plastic deep dishes each having a diameter of 160 mm and a height of 28 mm were prepared, and six pots were respectively placed therein. As soil, 45 mL of vermiculite, 22.5 mL of granular soil (Kumiai horticultural soil), and 22.5 mL of vermiculite were placed in the pot in this order.

In a growth chamber set at room temperature of 22°C, the light period was 16 hours and the dark period was 8 hours. The light conditions were set such that the light intensity was 5000 lx in the central part under irradiation with the fluorescent lamp. Water supply was conducted from the bottom, and the water level was set at about 5 mm. Chemical treatment was started 2 weeks after seeding. More specifically, on the 8th, 10th, 12th, and 14th days after seeding, 50 mL of the plant growth regulator was added instead of water supply.

As the plant growth regulator, various extracts of Pseudozyma siamensis obtained in Production Example 2 were used. Furthermore, for comparison, a plant growth regulator formed from 0.1 mM of ergothioneine aqueous solution was used.

On the 95th day after seeding, seeds were harvested, and the seed yield was evaluated. The evaluation results are shown in Table 6.

**[Table 6]**

| Extraction method | EGT concentration | Plant height | | Seed yield | |
|---|---|---|---|---|---|
| | mM | ratio to untreated control | ratio to EGT | ratio to untreated control | ratio to EGT |
| Methanol extraction | 0.1 | 1.3 | 1.2 | 2.1 | 1.7 |
| Acetone extraction | 0.1 | 1.2 | 1.1 | 2.0 | 1.6 |
| Freeze-thaw extraction | 0.1 | 1.1 | 1.1 | 1.8 | 1.5 |
| Grinding extraction | 0.1 | 1.3 | 1.2 | 1.9 | 1.5 |
| EGT | 0.1 | 1.1 | 1.0 | 1.2 | 1.0 |
| Untreated control | - | 1.0 | 0.9 | 1.0 | 0.8 |

As shown in Table 6, for all the extraction methods, the extracts of the ergothioneine-producing microorganisms resulted in greater plant heights and greater seed yields than those in the treatment with only ergothioneine and untreated control, and achieved excellent plant growth promoting effect.

### Evaluation Example 7: Effect in the case where Arabidopsis thaliana was treated with extract of microorganisms obtained by various extraction methods

One individual Arabidopsis thaliana (Col-0) was sown in a plastic pot having a diameter of 60 mm and a height of 55 mm. Plastic deep dishes each having a diameter of 160 mm and a height of 28 mm were prepared, and six pots were respectively placed therein. As soil, 45 mL of vermiculite, 22.5 mL of granular soil (Kumiai horticultural soil), and 22.5 mL of vermiculite were placed in the pot in this order.

In a growth chamber set at room temperature of 22°C, the light period was 16 hours and the dark period was 8 hours. The light conditions were set such that the light intensity was 5000 lx in the central part under irradiation with the fluorescent lamp. Water supply was conducted from the bottom, and the water level was set at about 5 mm. Chemical treatment was started 2 weeks after seeding. More specifically, on the 8th, 10th, 12th, and 14th days after seeding, 50 mL of the plant growth regulator was added instead of water supply.

As the plant growth regulator, various extracts of Pseudozyma siamensis obtained in Production Example 2 were used. Furthermore, for comparison, a plant growth regulator formed from 0.1 mM of ergothioneine aqueous solution was used.

On the 93rd day after seeding, the plant height, the aboveground part weight, and the seed yield were evaluated. The evaluation results are shown in Table 7.

**[Table 7]**

| Extraction method | EGT concentration | Plant height | | Aboveground part weight | | Seed yield | |
|---|---|---|---|---|---|---|---|
| | mM | ratio to untreated control | ratio to EGT | ratio to untreated control | ratio to EGT | ratio to untreated control | ratio to EGT |
| Acid extraction | 0.1 | 1.3 | 1.2 | 1.2 | 1.1 | 1.7 | 1.4 |
| Alkali extraction | 0.1 | 1.4 | 1.3 | 1.2 | 1.2 | 1.5 | 1.2 |
| Surfactant extraction | 0.1 | 1.4 | 1.3 | 1.6 | 1.4 | 1.5 | 1.2 |
| Autoclave extraction | 0.1 | 1.4 | 1.3 | 1.4 | 1.3 | 1.4 | 1.1 |
| EGT | 0.1 | 1.1 | 1.0 | 1.1 | 1.0 | 1.3 | 1.0 |
| Untreated control | - | 1.0 | 0.9 | 1.0 | 0.9 | 1.0 | 0.8 |

As shown in Table 7, for all the extraction methods, the extracts of the ergothioneine-producing microorganisms resulted in greater plant heights, greater aboveground part weights, and greater seed yields than those in the treatment with only ergothioneine and untreated control, and achieved excellent plant growth promoting effect.

### INDUSTRIAL APPLICABILITY

The present invention achieves excellent plant growth promotion and can be used in the fields such as agriculture and horticulture.

## Claims

1. A plant growth regulator comprising an extract of an ergothioneine-producing microorganism as an active ingredient,
the extract containing ergothioneine.

2. The plant growth regulator according to claim 1, wherein the ergothioneine-producing microorganism is at least one type of microorganism selected from the group consisting of microorganisms belonging to the genus Apiotrichum, microorganisms belonging to the genus Dirkmeia, microorganisms belonging to the genus Papiliotrema, microorganisms belonging to the genus Pseudozyma, microorganisms belonging to the genus Ustilago, microorganisms belonging to the genus Methylobacterium, microorganisms belonging to the genus Aureobasidium, microorganisms belonging to the genus Rhodotorula, microorganisms belonging to the genus Rhodosporidiobolus, microorganisms belonging to the genus Vanrija, microorganisms belonging to the genus Pleurotus, microorganisms belonging to the genus Aspergillus, microorganisms belonging to the genus Streptomyces, microorganisms belonging to the genus Actinomyces, microorganisms belonging to the genus Mycobacterium, microorganisms belonging to the genus Corynebacterium, microorganisms belonging to the genus Escherichia, microorganisms belonging to the genus Enterobacter, microorganisms belonging to the genus Pantoea, microorganisms belonging to the genus Klebsiella, microorganisms belonging to the genus Salmonella, microorganisms belonging to the genus Schizosaccharomyces, microorganisms belonging to the genus Saccharomyces, microorganisms belonging to the genus Chlorobium, microorganisms belonging to the genus Candida, microorganisms belonging to the genus Penicillium, microorganisms belonging to the genus Neurospora, microorganisms belonging to the genus Claviceps, microorganisms belonging to the genus Moniliella, microorganisms belonging to the genus Cryptococcus, microorganisms belonging to the genus Pycnoporus, microorganisms belonging to the genus Pleurotus, microorganisms belonging to the genus Flammulina, microorganisms belonging to the genus Leucopaxillus, microorganisms belonging to the genus Phellinus, microorganisms belonging to the genus Tricholoma, microorganisms belonging to the genus Coprinus, microorganisms belonging to the genus Hericium, microorganisms belonging to the genus Lyophyllum, microorganisms belonging to the genus Rozites, microorganisms belonging to the genus Pholiota, microorganisms belonging to the genus Mycoleptodonoides, microorganisms belonging to the genus Agrocybe, microorganisms belonging to the genus Grifola, and microorganisms belonging to the genus Agaricus.

3. The plant growth regulator according to claim 1 or 2, wherein the ergothioneine-producing microorganism is at least one microorganism selected from the group consisting of Apiotrichum porosum, Dirkmeia churashimaensis, Papiliotrema flavescens, Pseudozyma siamensis, and Rhodosporidiobolus azoricus.

4. A method for promoting plant growth comprising treating a plant with the plant growth regulator described in any one of claims 1 to 3.

5. The plant growth regulator according to any one of claims 1 to 3, wherein the plant growth regulator is an agent for increasing seed yield.

6. The plant growth regulator according to any one of claims 1 to 3, wherein the plant growth regulator is an agent for increasing plant height.

7. The plant growth regulator according to any one of claims 1 to 3, wherein the plant growth regulator is an agent for increasing flower number.

8. The plant growth regulator according to any one of claims 1 to 3, wherein the plant growth regulator is an agent for increasing aboveground part weight.

9. The plant growth regulator according to any one of claims 1 to 3, wherein the plant growth regulator is an agent for increasing underground part weight.
